(19) Europäisches Patentamt / European Patent Office / Office européen des brevets

(11) **EP 2 376 967 B1**

(12) **FASCICULE DE BREVET EUROPEEN**

(45) Date de publication et mention de la délivrance du brevet:
**10.08.2016 Bulletin 2016/32**

(21) Numéro de dépôt: **09802180.1**

(22) Date de dépôt: **15.12.2009**

(51) Int Cl.:
*G02B 27/00* (2006.01)   *G02B 5/08* (2006.01)
*G02B 6/122* (2006.01)

(86) Numéro de dépôt international:
**PCT/FR2009/052544**

(87) Numéro de publication internationale:
**WO 2010/076485 (08.07.2010 Gazette 2010/27)**

(54) **PROCEDE DE STRUCTURATION D'UN MIROIR NON METALLIQUE MULTICOUCHE OMNIDIRECTIONNEL**

VERFAHREN ZUM STRUKTURIEREN EINES NICHTMETALLISCHEN OMNIDIREKTIONALEN MEHRSCHICHTIGEN SPIEGELS

METHOD FOR STRUCTURING A NON-METAL OMNIDIRECTIONAL MULTILAYER MIRROR

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **15.12.2008 FR 0807041**

(43) Date de publication de la demande:
**19.10.2011 Bulletin 2011/42**

(73) Titulaires:
• **Axel, Françoise**
  **75004 Paris (FR)**
• **Peyriere, Jacques**
  **75004 Paris (FR)**

(72) Inventeurs:
• **Axel, Françoise**
  **75004 Paris (FR)**
• **Peyriere, Jacques**
  **75004 Paris (FR)**

(74) Mandataire: **Cabinet Plasseraud**
  **66, rue de la Chaussée d'Antin**
  **75440 Paris Cedex 09 (FR)**

(56) Documents cités:
WO-A-02/054030   WO-A-03/062871
US-A1- 2004 047 055   US-B1- 6 903 873

• DAL NEGRO L ET AL: "Photon band gap properties and omnidirectional reflectance in Si/SiO2 Thue-Morse quasicrystals" APPLIED PHYSICS LETTERS, AIP, AMERICAN INSTITUTE OF PHYSICS, MELVILLE, NY, US, vol. 84, no. 25, 10 juin 2004 (2004-06-10) , pages 5186-5188, XP012073067 ISSN: 0003-6951 cité dans la demande
• NIAN-HUA LIU: "Propagation of light waves in Thue-Morse dielectric multilayers" PHYSICAL REVIEW B (CONDENSED MATTER) APS THROUGH AIP USA, vol. 55, no. 6, 1 février 1997 (1997-02-01), pages 3543-3547, XP002540023 ISSN: 0163-1829
• KOHMOTO M; SUTHERLAND B; IGUCHI K: "Localization in optics: quasiperiodic media" Physical Review Letters USA, vol. 58, no. 23, 8 juin 1987 (1987-06-08), pages 2436-2438, XP002540024 ISSN: 0031-9007 cité dans la demande
• CHIGRIN D N ET AL: "All-Dielectric One-Dimensional Periodic Structures for Total Omnidirectional Reflection and Partial Spontaneous Emission Control" JOURNAL OF LIGHTWAVE TECHNOLOGY, IEEE SERVICE CENTER, NEW YORK, NY, US, vol. 17, no. 11, 1 novembre 1999 (1999-11-01), XP011029552 ISSN: 0733-8724

• LI HONGQIANG ET AL: "Disordered dielectric high reflectors with broadband from visible to infrared" APPLIED PHYSICS LETTERS, AIP, AMERICAN INSTITUTE OF PHYSICS, MELVILLE, NY, US, vol. 74, no. 22, 31 mai 1999 (1999-05-31), pages 3260-3262, XP012022791 ISSN: 0003-6951

**Description**

**Domaines de l'invention**

La présente invention se rapporte à un procédé de structuration d'un miroir non métallique "omnidirectionnel", c'est à dire qui réfléchit la lumière pour tout angle d'incidence, comprenant plusieurs couches et pouvant être mis en oeuvre par un ordinateur.

La présente invention se rapporte également à un miroir non métallique omnidirectionnel comprenant plusieurs couches, obtenu par ce procédé.

Un tel miroir est encore appelé miroir non métallique multicouche hétérostructure omnidirectionnel.

L'invention trouve application dans tous les cas où un miroir non métallique omnidirectionnel peut être employé. Par exemple et non limitativement, l'invention trouve application pour des guides d'onde, des lasers, ou plus généralement dans le domaine de l'optique: dans le domaine des guides d'onde, il est notamment intéressant d'avoir un guide dont les parois réfléchissent au mieux la lumière incidente pour limiter les pertes en ligne dans le guide, et ce, quel que soit l'angle d'incidence de la lumière arrivant sur les parois du guide.

**Description et évaluation de l'état antérieur de la technique**

Les miroirs tels qu'ils nous sont familiers, connus et utilisés depuis la plus haute antiquité sont métalliques, qu'ils le soient dans toute la masse, faits de métal, ou qu'une couche mince métallique soit apposée sur un autre matériau. (verre). Mais pour certaines plages de longueur d'onde de la lumière, non visible mais ayant un intérêt technologique fort, ils absorbent une fraction notable de la lumière incidente. C'est pour éviter en particulier cette difficulté que l'on a cherché à fabriquer des miroirs diélectriques, et aussi que l'intérêt pour des empilements de couches minces non-métalliques s'est développé.

Un miroir non métallique multicouche comprend deux ou plusieurs couches pouvant différer par leur composition et/ou leur épaisseur et dans l'état antérieur, le plus souvent, formant une structure de base répétée plusieurs fois en un arrangement périodique.

Mais un tel miroir peut aussi être constitué de deux ou plusieurs de ces couches répétées selon des suites substitutives non périodiques. On parle alors d'hétérostructure apériodique. Cette hétérostructure qui constitue le miroir est dotée d'une surface sur laquelle l'indice de réfraction est pratiquement constant, alors qu'il varie perpendiculairement à cette surface.

L'hétérostructure peut être obtenue à partir d'une seule suite substitutive, de telle sorte que chaque couche est une couche simple d'un matériau unique. Elle peut être obtenue à partir d'une seule suite substitutive, de telle sorte que chaque couche est l'assemblage de couches élémentaires ayant elles-mêmes une structure. Enfin, l'hétérostructure peut être obtenue à partir de plusieurs suites substitutives, de telle sorte qu'elle est constituée de plusieurs sous-ensembles de couches, chacune obtenue par une suite substitutive.

Deux exemples bien connus de telles suites substitutives sont la suite de Fibonacci, qui est quasipériodique, ou la suite de Thue-Morse, qui est non quasipériodique.

Dans l'état antérieur de la technique, on sait déterminer le comportement d'une telle hétérostructure vis-à-vis de la lumière, pour une longueur d'onde donnée λ et un angle d'incidence donné θ, dans les deux modes fondamentaux dits "transverse électrique" (TE), et "transverse magnétique" (TM). Dans le mode TE, le champ électrique de la lumière est polarisé perpendiculairement au plan d'incidence. Dans le mode TM, le champ magnétique de la lumière est polarisé perpendiculairement au plan d'incidence. Le plan d'incidence est défini par le rayon incident et la perpendiculaire au plan de la multicouche. Tout rayonnement incident est complètement décrit sur la base de ces deux modes TE et TM.

On pourra trouver les détails utiles dans les documents suivants:

- D1: F. Abelès, Annales de Physique vol. 5 (1950) 596-640 et 707-782, Recherche sur la propagation des ondes électromagnétiques sinusoïdales dans les milieux stratifiés. Application aux couches minces,
- D2: "Principles of Optics", M. Born, E. Wolf, 7th edition 1999, Cambridge University Press,
- D3: Photonic Crystals, J. D. Joannopoulos, R. D. Meade, J. N. Winn, Princeton U. P. Publisher 1995.),
- (D4): Optical waves in layered media, P. Yeh, John Wiley and sons, publisher.

La solution adéquate des Equations de Maxwell qui régit la propagation prend la forme dans ce milieu stratifié d'une une matrice 2×2 dite "matrice de transfert" $M_N$, qui relie les propriétés de la lumière dans le plan d'entrée de la multicouche et dans le plan de sortie, elle-même étant le produit de N matrices de transfert élémentaires $S_j$ caractérisant chacune les propriétés de la lumière dans la plan d'entrée et de sortie de chacune des N couches qui constituent l'hétérostructure.

Dans le cas, fréquent, de deux types de couches différentes, désignées par a et b, les matrices élémentaires

$S^a$, $S^b$, caractérisant une couche j (j de 1 à N), ont pour forme:

$$S^a = \begin{pmatrix} \cos(2\pi n_a d_a \cos(\theta_a)/\lambda) & (1/p_a)\sin(2\pi n_a d_a \cos(\theta_a)/\lambda) \\ p_a \sin(2\pi n_a d_a \cos(\theta_a)/\lambda) & \cos(2\pi n_a d_a \cos(\theta_a)/\lambda) \end{pmatrix} \qquad (R1)$$

où :

$\lambda$ est la longueur d'onde de la lumière incidente.

$n_a$ est l'indice de réfraction de la couche a,

$d_a$ est l'épaisseur de la couche a,

$\theta_a$ est l'angle de réfraction dans la couche a,

et soit $p_a = n_a \cdot \cos(\theta_a)$ lorsqu'on considère le mode fondamental dit "transverse électrique" (TE) pour lequel le champ électrique est polarisé perpendiculairement au plan d'incidence,

soit $p_a = \cos(\theta_a)/n_a$ lorsqu'on considère le mode fondamental dit "transverse magnétique" (TM) pour lequel le champ magnétique est polarisé perpendiculairement au plan d'incidence,

Il en va de même pour la couche de type b en remplaçant partout dans (R1) l'indice a par l'indice b.

La matrice de transfert de l'hétérostructure $M_N$, est alors:

$$M_N = S_N \, S_{N-1} \, S_{N-2} \ldots \ldots S_2 \, S_1 \qquad (R2)$$

Pour calculer $M_N$ on multipliait donc <u>directement</u>, dans l'état antérieur de la technique, les matrices de transfert élémentaires pour obtenir la matrice de transfert de l'hétérostructure, et si celle-ci avait N couches, on effectuait N-1 multiplications de matrices de transferts élémentaires.

Il a été montré aussi dans un travail antérieur consacré surtout au cas de la suite de Fibonacci (D5: M. Kohmoto, B. Sutherland, K. Iguchi, Phys. Rev. Lett. 58 (1987) 2436 Localization in Optics: quasiperiodic media.), mais ce résultat est général, que le coefficient de transmission T de l'hétérostructure s'exprime de façon simple en fonction de la somme des carrés des éléments de $M_N$ qui eux-mêmes s'expriment de façon très simple en fonction de la trace $TrM_n$, qui est la somme de ses deux éléments diagonaux, et de l' "antitrace" $aTrM_n$ qui est la différence de ses deux éléments non diagonaux. On a

$$T = \frac{4}{\left( \, TrM_n \, \right)^2 + \left( \, aTrM_n \, \right)^2} \qquad (R3)$$

Le coefficient de transmission T qui est le rapport de l'intensité transmise et de l'intensité incidente vaut donc zéro dans la cas d'un miroir.

Dans l'état antérieur de la technique aussi, on connaît des procédés pour engendrer des suites <u>déterministes</u> au moyen d'algorithmes substitutifs.

Une substitution $\sigma$ opère sur un alphabet $\mathcal{A}$ de k lettres désignées par $a_1, a_2, \ldots, a_k$ (lorsque k=2, on notera souvent les lettres a et b au lieu de $a_1$ et $a_2$, lorsque k=3, on notera souvent les lettres a, b et c). Un mot sur l'alphabet $\mathcal{A}$ est une suite finie (qui peut être vide) de lettres de cet alphabet. Pour chaque lettre u de l'alphabet $\mathcal{A}$ on se donne un mot, noté $\sigma_u$, composé de lettres de cet alphabet. C'est cette donnée qui est appelée substitution sur l'alphabet $\mathcal{A}$. Si maintenant $w = u_1 u_2 \ldots u_l$ est un mot dont les $u_j$ sont les lettres, le mot obtenu en mettant bout à bout dans l'ordre où ils se présentent les mots $\sigma_{u1}, \sigma_{u2}, \ldots, \sigma_{uk}$ sera noté $\sigma(w)$. On dit que l'on a "appliqué" la substitution $\sigma$ au mot w. Si l'on applique $\sigma$ au mot $\sigma(w)$, on obtient un mot noté $\sigma^2(w)$, et ainsi de suite. Par convention, on pose $\sigma^0(w)=w$.

En termes mathématiques, une substitution sur $\mathcal{A}$ est un endomorphisme du monoïde libre engendré par $\mathcal{A}$. Pour illustrer ce qu'est une suite substitutive ainsi que les procédés auxquels elle donne naissance, on fournit ci-dessous trois exemples.

Dans un premier exemple, une suite substitutive est construite avec un alphabet $\mathcal{A}$ de deux lettres a et b. Les deux lettres a et b peuvent représenter deux couches d'une hétérostructure pouvant différer par leur composition et/ou leur épaisseur. On définit les deux mots de la substitution : aab et ba. On part du mot $w_0 = a$. La substitution $\sigma$ appliquée

au mot $w_0$ consiste alors à remplacer chaque lettre *a* par le mot de substitution *aab* et chaque lettre *b* par le mot de substitution *ba*. On obtient ainsi le mot

$$w_1 = \sigma(w_0) = aab.$$

Si on itère cette opération de substitution en remplaçant, dans $w_1$, les lettres a par le mot aab = $\sigma_a$ et les lettres b par le mot ba = $\sigma_b$, on obtient alors le mot

$$w_2 = \sigma(w_1) = \sigma^2(w_0) = aabaabba$$

Puis, si on répète une nouvelle fois l'opération, on obtient

$$w_3 = \sigma(w_2) = \sigma^3(w_0) = aabaabbaaabaabbabaaab.$$

On peut répéter l'opération de substitution plusieurs fois de suite sur ce principe.

Dans un second exemple, une suite substitutive est construite avec un alphabet $\mathcal{A}$ comportant trois lettres a, b et c. Les trois lettres a, b et c peuvent représenter trois couches d'une hétérostructure pouvant différer par leur composition et/ou leur épaisseur. On pose trois mots de substitution : ab, bc et ac. On part du mot $w_0$=a. La substitution $\sigma$ appliquée au mot $w_0$ consiste alors à remplacer chaque lettre *a* par le mot de substitution *ab* = $\sigma_a$, chaque lettre b par le mot de substitution *bc* = $\sigma_b$ et chaque lettre c par le mot de substitution *ac* = $\sigma_c$. Partant de $w_0$=a, on obtient ainsi par substitutions successives:

$$w_1 = \sigma(w_0) = ab$$
$$w_2 = \sigma(w_1) = \sigma^2(w_0) = abbc$$
$$w_3 = \sigma(w_2) = \sigma^3(w_0) = abbcbcac$$
$$w_4 = \sigma(w_3) = \sigma^4(w_0) = abbcbcacbcacabac$$
$$etc\ldots$$

Dans les deux exemples illustrés ci-dessus, chaque mot $w_{n-1}$ est un préfixe du mot $w_n$. En effet, on retrouve le mot $w_{n-1}$ au début du mot $w_n$. Il n'en est pas toujours ainsi comme le montre le troisième exemple.

Dans ce troisième exemple, une suite substitutive est construite avec un alphabet $\mathcal{A}$ réduit aux deux lettres a et b. Les deux lettres a et b peuvent représenter deux couches d'une hétérostructure pouvant différer par leur composition et/ou leur épaisseur. On pose deux mots de substitution: *bab* et *ab.* On part du mot $w_0$ = a. La substitution $\sigma$ appliquée au mot $w_0$ consiste alors à remplacer chaque lettre a par le mot de substitution bab = $\sigma_a$, et chaque lettre b par le mot ab = $\sigma_b$. Partant de $w_0$ = a, on obtient ainsi par substitutions successives :

$$w1 = \sigma(w_0) = bab$$
$$w2 = \sigma(w_1) = \sigma^2(w_0) = abbabab$$
$$w3 = \sigma(w_2) = \sigma^3(w_0) = babababbabbabbabab$$
$$w4 = \sigma(w_3) = \sigma^4(w_0) = abbababbababbababbabbababbabbabab$$
$$etc\ldots$$

A chaque substitution $\sigma$ est associée une matrice $M_\sigma$, qui, pour les trois exemples mentionnés ci-dessus, cette matrice s'écrit, respectivement :

$$M_{\sigma,\,\text{exemple 1}} = \begin{pmatrix} 2 & 1 \\ 1 & 1 \end{pmatrix} ; M_{\sigma,\,\text{exemple 2}} = \begin{pmatrix} 1 & 0 & 1 \\ 1 & 1 & 0 \\ 0 & 1 & 1 \end{pmatrix} \text{ et } M_{\sigma,\,\text{exemple 3}} = \begin{pmatrix} 1 & 1 \\ 2 & 1 \end{pmatrix}$$

En effet, pour le premier exemple, la substitution $\sigma_a$ = aab opérée sur la lettre a fait apparaître 2 fois la lettre a et une fois la lettre b, d'où les coefficients de la première colonne de la matrice $M_{\sigma, \text{exemple 1}}$. Par ailleurs, la substitution $\sigma_b$ = ba opérée sur la lettre b fait apparaître 1 fois la lettre b et une fois la lettre a, d'où les coefficients de la deuxième colonne de la matrice $M_{\sigma, \text{exemple 1}}$.

Pour le deuxième exemple, la substitution $\sigma_a$ = ab opérée sur la lettre a fait apparaître une fois la lettre a et une fois la lettre b, mais pas la lettre c, d'où les coefficients de la première colonne de la matrice $M_{\sigma, \text{exemple 2}}$. La substitution $\sigma_b$ = bc opérée sur la lettre b fait apparaître 1 fois la lettre b et une fois la lettre c, mais pas la lettre a, d'où les coefficients de la deuxième colonne de la matrice $M_{\sigma, \text{exemple 2}}$. Enfin, la substitution $\sigma_c$ = ac opérée sur la lettre c fait apparaître 1 fois la lettre a et une fois la lettre c, mais pas la lettre b, d'où les coefficients de la troisième colonne de la matrice $M_{\sigma, \text{exemple 2}}$.

Pour le troisième exemple, la substitution $\sigma_a$ = bab opérée sur la lettre a fait apparaître une fois la lettre a et deux fois la lettre b, d'où les coefficients de la première colonne de la matrice $M_{\sigma, \text{exemple 3}}$. Par ailleurs, la substitution $\sigma_b$ = ab opérée sur la lettre b fait apparaître 1 fois la lettre a et une fois la lettre b, d'où les coefficients de la deuxième colonne de la matrice $M_{\sigma,\text{exemple 3}}$.

Ce type de matrice possède les propriétés suivantes :

- la matrice $M_\sigma$ comporte une valeur propre positive $\rho > 1$ et supérieure au module de chacune des autres valeurs propres de cette matrice $M_\sigma$. Pour les trois exemples mentionnés ci-dessus, la valeur propre $\rho$ ainsi définie correspond respectivement aux valeurs: $\rho_{exemple,1} = \left(3 + \sqrt{5}\right)/2$ , $\rho_{exemple,2} = 2$ et $\rho_{exemple,3} = 1 + \sqrt{2}$ .

- la longueur $l_n$ du mot $w_n = \sigma^n(w_0)$, obtenu après n substitutions d'une suite substitutive $\sigma$ à partir du mot $w_0$, est de l'ordre de $\rho^n$.

Ainsi, pour le premier exemple, les longueurs (nombre de lettres dans un mot) des mots $w_0$, $w_1$, $w_2$, $w_3$, $w_4$, $w_5$, $w_6$, $w_7$, $w_8$, $w_9$, $w_{10}$, $w_{11}$, $w_{12}$ etc...valent respectivement 1, 3, 8, 21, 55, 144, 377, 987, 2584, 6765, 17711, 46368, 121393, etc....

Pour le deuxième exemple, les longueurs des mots $w_0$, $w_1$, $w_2$, $w_3$, $w_4$, $w_5$, $w_6$, $w_7$, $w_8$, $w_9$, $w_{10}$, etc...valent respectivement 1, 2, 4, 8, 16, 32, 64, 128, 256, 512, 1024, etc...

Pour le troisième exemple, les longueurs des mots $w_0$, $w_1$, $w_2$, $w_3$, $w_4$, $w_5$, $w_6$, $w_7$, $w_8$, $w_9$, $w_{10}$, etc...valent respectivement 1, 3, 7, 17, 41, 99, 239, 577, 1393, 3363, 8119, etc....

On comprend donc que la longueur $l_n$ du mot $w_n$ augmente très rapidement avec le nombre n de substitutions opérées.

Cela signifie que le nombre de couches N formant une hétérostructure, par exemple destinée à former un miroir non métallique multicouche, augmente très rapidement avec le nombre n d'itérations opérées, plus précisément comme la quantité $\rho^n$. Or le coefficient de transmission T s'obtient, dans l'état antérieur de la technique, en faisant directement le produit des N matrices de transfert décrivant la propagation de la lumière dans la multicouche, et si l'on souhaitait structurer un tel miroir constitué d'une hétérostructure non périodique, présentant des propriétés particulières en vue d'une application donnée, la quantité de calculs nécessaires à la définition de la structure du miroir deviendrait vite rédhibitoire: il faut, en effet, effectuer de nombreux calculs pour tester l'influence respective de chaque paramètre physique indépendant sur le coefficient de transmission du miroir.

En outre, l'emploi de la technique qui consiste à multiplier directement les matrices de transfert présente l'inconvénient de faire naître, à chaque étape du calcul, fait au moyen d'un ordinateur, c'est-à-dire à chaque fois qu'on effectue une multiplication supplémentaire d'une matrice de transfert élémentaire avec celles qui précèdent, des erreurs d'arrondi cumulatives qui peuvent rapidement priver de validité le calcul effectué. Il n'est donc même pas certain que le calcul effectué soit suffisamment fiable.

Pour ces raisons, on a déjà cherché, dans l'état antérieur de la technique, des solutions permettant de s'affranchir de ces inconvénients.

Une voie empruntée a été de diminuer le nombre de paramètres physiques indépendants intervenant dans la structuration du miroir non métallique multicouche. C'est, par exemple, ce qui a été proposé par le document US 6 903 873 B1 de Joannopoulos et al. du 7 Juin 2005. (D6) qui décrit un empilement périodique de couches.

D6 présente un procédé pour obtenir un miroir non métallique multicouche avec un arrangement périodique de deux types de couches, dont les épaisseurs sont reliées entre elles par une équation présentée par les auteurs comme devant optimiser la réflexion.

La voie proposée dans D6 part donc du principe qu'il est utile d'employer une structure périodique, dont les épaisseurs individuelles favorisent la réflexion sous incidence normale. Ainsi par exemple, des épaisseurs $d_a$, $d_b$ utilisées pour les couches a, b sont-elles "quart d'onde", c'est-à-dire telles que $d_a = \lambda/4n_a$ et $d_b = \lambda/4n_b$ respectivement, où $\lambda$ est la longueur d'onde de la lumière incidente.

La méthode selon D6 permet ainsi de diminuer le nombre de paramètres physiques intervenant dans les calculs, et donc, le temps de calcul par ordinateur nécessaire à la structuration d'un miroir adapté pour une application donnée.

En outre, en fixant un nombre restreint de couches pour le miroir, l'erreur de calcul reste acceptable.

Cette méthode présente l'inconvénient majeur de restreindre considérablement les possibilités de structuration d'un miroir non métallique pour une application concrète donnée.

En effet, l'épaisseur de chaque couche du miroir et la nature des matériaux de ces couches sont imposées. De surcroît, le nombre des unités périodiques de l'échantillon est limité pour éviter les erreurs de calcul, et la structure est nécessairement périodique.

Pour améliorer sa méthode, D6 suggère que la structure peut être non périodique. Cependant, D6 ne décrit aucune méthode de calcul pour parvenir à une réalisation fiable et rapide d'un miroir omnidirectionnel composé d'une hétérostructure non périodique.

Dans le peu de travaux publiés accessibles sur cette partie de l'état antérieur de la technique, Dal Negro et al., (D7: L. Dal Negro, M. Stolfi, Y. Yi, J. Michel, X. Duan, L.C. Kimerling, J. LeBlanc, J. Haavisto, Appl. Phys. Lett. 84, (2004) 5186, Photon Band gap properties and omnidirectional reflectance in SI/SiO2 Thue-Morse quasicrystals.) qui travaillent avec une multicouche certes non périodique ne sont pas capables de structurer les miroirs omnidirectionnels qu'ils ont mis en évidence en choisissant la plage de longueur d'onde de la lumière dans laquelle ceux-ci sont réfléchissants notamment parce qu'ils ont, au départ, restreint les épaisseurs à des valeurs "quart d'onde".

## Résumé de l'invention

L'invention à pour objet un procédé de structuration d'un miroir non métallique omnidirectionnel dans une gamme d'angles d'incidence quelconque mais prédéterminée et pour une longueur d'onde ou une plage de longueur d'onde quelconque mais prédéterminée. Elle est définie par la revendication 1.

Selon d'autres modes de réalisation :

- on peut définir, lors de l'étape A), une structure comportant k couches $a_j$ avec $1 \leq j \leq k$ de matériaux non métalliques différents, à chacune desquelles on associe respectivement une matrice élémentaire $A_j$ avec $1 \leq j \leq k$ intégrant des paramètres physiques de la couche, et des paramètres de la lumière traversant ladite couche, et, pour obtenir la matrice de l'étape C), on utilise des relations de récurrence reliant la matrice $A_{J,n+1}$ en tant que combinaison linéaire de la matrice unité I d'ordre 2, et des matrices $A_{J,n}$ dans lesquelles les coefficients de ces relations sont des polynômes dépendant des traces des matrices $A_{J,n}$ où : $J = (j_1, j_2,..., j_v)$ telle que $1 \leq j \leq k$ et $1 \leq j_1 < j_2 < < j_v \leq k$, et $A_{J,n} = A_{j_1,n} A_{j_2,n}...A_{j_v,n}$ est la matrice obtenue après n répétitions de la suite substitutive sur la matrice $A_j$ pour $1 \leq j \leq k$ ;
- si k = 2, on peut définir lors de l'étape A), une structure comportant deux couches $a_1 = a$, $a_2 = b$ de matériaux non métalliques différents, à chacune desquelles on associe respectivement une matrice élémentaire $A_1 = A$, $A_2 = B$ intégrant des paramètres physiques de la couche, et des paramètres de la lumière traversant ladite couche, alors, pour obtenir la matrice de l'étape C), on utilise les relations de récurrence suivantes :

a. $A_{n+1} = N_{\sigma,1,1}(TrA_n, TrB_n, TrA_nB_n) \times I + N_{\sigma,1,2}(TrA_n, TrB_n, TrA_nB_n)A_n + N_{\sigma,1,3}(TrA_n, TrB_n, TrA_nB_n)B_n + N_{\sigma,1,4}(TrA_n, TrB_n, TrA_nB_n)A_nB_n$ (R1)

b. $B_{n+1} = N_{\sigma,2,1}(TrA_n, TrB_n, TrA_nB_n) \times I + N_{\sigma,2,2}(TrA_n, TrB_n, TrA_nBn)A_n + N_{\sigma,2,3}(TrA_n, TrB_n, TrA_nB_n)B_n + N_{\sigma,2,4}(TrA_n, TrB_n, TrA_nB_n)A_nB_n$ (R2)

c. $A_{n+1}B_{n+1} = N_{\sigma,3,1}(TrA_n, TrB_n, TrA_nB_n)I + N_{\sigma,3,2}(TrA_n, TrB_n, TrA_nB_n)A_n + N_{\sigma,3,3}(TrA_n, TrB_n, TrA_nB_n)B_n + N_{\sigma,3,4}(TrA_n, TrB_n, TrA_nB_n)A_nB_n$ (R3)

où :

- la matrice I est la matrice unité d'ordre 2,
- la matrice $N_\sigma$ est une matrice $3 \times 4$, associée à la suite substitutive $\sigma$ et dont les coefficients $N_{\sigma,i,j}$ (avec $1 \leq i \leq 3$ et $1 \leq j \leq 4$) sont des polynômes de trois variables x, y et z à coefficients entiers, et
- $TrA_n$, $TrB_n$, et $TrA_nB_n$ sont, respectivement, la trace de la matrice $A_n$, la trace de la matrice $B_n$, et la trace de la matrice $A_nB_n$ ;

- on peut associer une application de trace à la récurrence par blocs au cours de l'étape C) ;
- on peut calculer le coefficient de transmission T de la matrice obtenue à l'étape C) par la formule :

$$T = \frac{4}{\left( \left( TrA_n \right)^2 + \left( aTrA_n \right)^2 \right)}$$

où $TrA_n$ est la trace de la matrice obtenue à l'étape C), et $aTrA_n$ son antitrace ;

- la structure de l'étape B) peut être obtenue à partir d'une seule suite substitutive, chaque couche en matériau non métallique étant une couche simple réalisée en un matériau unique ;
- la structure de l'étape B) peut être obtenue à partir d'une seule suite substitutive appliquée à un ensemble de couches, dans lequel chaque couche est elle-même un assemblage de couches simples, réalisées chacune en un matériau unique ; et/ou
- la structure de l'étape B) peut être obtenue à partir de plusieurs suites substitutives, de sorte que la structure est formée de plusieurs sous-ensembles de couches simples, réalisées chacune en un matériau unique, chaque sous-ensemble étant obtenu par une suite substitutive, l'assemblage des sous-ensembles étant obtenu par une autre suite substitutive.

L'invention se rapporte également à un miroir non métallique omnidirectionnel pour une longueur d'onde ou une plage de longueurs d'onde quelconque mais prédéterminée, obtenu par le procédé de structuration précédent, comprenant au moins deux couches de matériaux non métalliques différents.

Dans le miroir non métallique précédent, les couches sont empilées de manière non périodique.

Un objectif de l'invention est de proposer un procédé de structuration d'un miroir non métallique omnidirectionnel pour une longueur d'onde ou une gamme de longueurs d'onde quelconque mais prédéterminée, dans lequel aucune contrainte préalable sur les paramètres physiques intervenant dans cette structuration n'est effectuée.

L'arrangement de couches suivant une suite substitutitve afin de constituer une structure éventuellement réfléchissante permet d'en calculer beaucoup plus "économiquement" les propriétés optiques et les capacités réfléchissantes en terme de matrices de transfert, ce pour une longueur d'onde et une incidence données - au moyen d'une formule de récurrence, la BBR ("Building Block Recurrence" selon la terminologie anglo-saxonne), découlant directement de la suite substitutive.

L'invention propose de mettre en oeuvre cette technique appelée récurrence de blocs (BBR)

Ce procédé peut être mis en oeuvre par ordinateur.

Prenons le premier exemple ci-dessus, où $\sigma(a)$ = aab $\sigma(b)$ = ba. On part du mot $w_0 = a$. Nous avons vu que

$$w_1 = \sigma(w_0) = aab.$$

$$w_2 = \sigma(w_1) = \sigma^2(w_0) = aabaabba$$

$$w_3 = \sigma(w_2) = \sigma^3(w_0) = aabaabbaaabaabbabaaab.$$

et ainsi de suite.

Si a correspond à une couche d'un certain matériau, il lui correspond une "matrice de transfert" élémentaire 2x2, soit A, de même la matrice B pour la couche b, qui relie les propriétés de la lumière dans le plan d'entrée de la couche et dans le plan de sortie.

Si l'on pose $A_0 = A$, $B_0 = B$ et si l'on définit par récurrence

$$A_{n+1} = A_n A_n B_n$$

et

$$B_{n+1} = B_n A_n ,$$

on voit que pour calculer $A_{n+1}$ et $B_{n+1}$ connaissant $A_n$ et $B_n$ on a dû effectuer 3 produits de matrices $2 \times 2$. Donc pour calculer $A_n$ et $B_n$, il suffit d'effectuer 3n produits de matrices $2 \times 2$. Evidemment, la matrice $A_n$ est la matrice de transfert de l'hétérostructure correspondant au mot $w_n$. Si, par exemple, n=7, la matrice est le produit de 987 produits de matrices élémentaires. On voit donc que dans ce cas, on a remplacé le calcul naïf de 986 produits de matrices 2x2 par le calcul de 7x3 = 21 produits de telles matrices. On dit alors que l'on procède à un produit par récurrence de blocs (en anglais Building Block Recurrence ou BBR).

Dans le cas général d'une substitution σ sur un alphabet $\mathcal{A}$, le calcul naïf précédent de la matrice de transfert de l'hétérostructure obtenue après n itérations nécessite de l'ordre de $\rho^n$ produits de matrices 2x2, alors que l'utilisation de la BBR n'en nécessite que de l'ordre de n.

On voit ainsi tout l'intérêt de considérer de telles structures. En effet, pour déterminer une hétérostructure correspondant aux spécifications cherchées, il faudra, pour tester un grand nombre de substitutions (il y en a 900 de longueur inférieure ou égale à 4 sur un alphabet de deux lettres) calculer la matrice de transfert aussi bien dans le cas TE que TM pour les longueurs d'onde concernées, avec un échantillonnage suffisamment fin de l'angle d'incidence.

Seule la BBR, en réduisant de façon critique le temps et le nombre des calculs permet d'atteindre un tel objectif de façon fiable.

Il reste à définir la valeur du coefficient de transmission $T_{seuil}$ à partir de laquelle on considère qu'on a fabriqué un miroir. Normalement T = 0 pour une réflexion parfaite. Mais la valeur $T_{seuil}$ peut dépendre de l'utilisation envisagée, par exemple, pour certaines applications, on se contentera de 0,02, ou même 0,05.

Un objectif de l'invention est ainsi de proposer un procédé de structuration d'un miroir non métallique omnidirectionnel pour une longueur d'onde ou une gamme de longueurs d'onde quelconque mais prédéterminées, dans lequel aucune contrainte préalable sur les paramètres physiques intervenant dans cette structuration n'est effectuée.

Pour atteindre cet objectif, l'invention propose le procédé de structuration d'un miroir non métallique omnidirectionnel comprenant les étapes suivantes :

A) on définit une structure de base comportant au moins deux couches de matériaux non métalliques différents, a et b à chacune desquelles on associe une matrice élémentaire intégrant des paramètres physiques de la couche, notamment les épaisseurs et indices de réfraction $d_a$, $d_b$, $n_a$, et $n_b$, et des paramètres de la lumière traversant ladite couche, notamment la longueur d'onde λ et l'angle d'incidence θ.

B) à partir de cette structure de base et d'une suite substitutive σ appliquée n fois, on engendre une autre structure définie
par le nombre N de ses couches,
par l'arrangement de ces couches déterminé par les itérations de σ et
par les paramètres physiques de chaque couche des matrices élémentaires comme en A
et dans laquelle on associe à chaque couche j (j de 1 à N) sa matrice de transfert $S_j$ intégrant les caractéristiques physiques de la couche considérée (épaisseur, indice de réfraction) et les caractéristiques de la lumière la traversant (longueur d'onde, angle d'incidence, mode TE ou TM)

C) on effectue, au moyen d'un ordinateur, le produit (en référence à R2)

$$M_N = S_N\,S_{N-1}\,S_{N-2}\ldots\ldots S_2\,S_1$$

des matrices élémentaires pour chaque valeur des paramètres (θ, λ, $d_a$, $d_b$, $n_a$, et $n_b$), mais au moyen de la récurrence par blocs définie par σ et selon leur arrangement au moyen de la BBR pour obtenir la matrice de transfert $M_N$ de la structure définie à l'étape B), à partir de laquelle on calcule son coefficient de transmission T (en référence à R3): par la formule:

$$T = \frac{4}{\left(\left(\,TrM_N\,\right)^2 + \left(\,aTrM_N\,\right)^2\right)}$$

où $TrM_N$ est la trace de la matrice $M_N$ (en référence à R2), obtenue à l'étape C), et $aTrM_N$ son antitrace.

D) on compare le coefficient de transmission T obtenu à une valeur seuil $T_{seuil}$ choisie en fonction de l'utilisation envisagée du miroir omnidirectionnel, et:

- si le coefficient de transmission T est inférieur à la valeur seuil $T_{seuil}$, pour tout angle d'incidence, à la longueur d'onde (ou sur la plage de longueurs d'onde considérée), pour le mode TE et pour le mode TM, la structure est un miroir omnidirectionnel.
- si le coefficient de transmission T est supérieur à la valeur seuil $T_{seuil}$ pour au moins un angle d'incidence, à la longueur d'onde ou sur la plage de longueurs d'onde considérées, soit pour le mode TE, soit pour le mode TM, on n'a pas un miroir, et on doit répéter les étapes C) et D), en faisant varier le nombre de couches, leur arrangement et/ou au moins l'un quelconque des paramètres physiques des couches suivant A), ou même, il faut définir une autre hétérostructure pendant l'étape B)

Or, pour la définir, il est possible de choisir sans restriction le nombre et la nature de couches de bases de l'hétérostructure selon A), la nature de la suite substitutive, ou encore le nombre de substitutions appliquées à cette suite selon B).

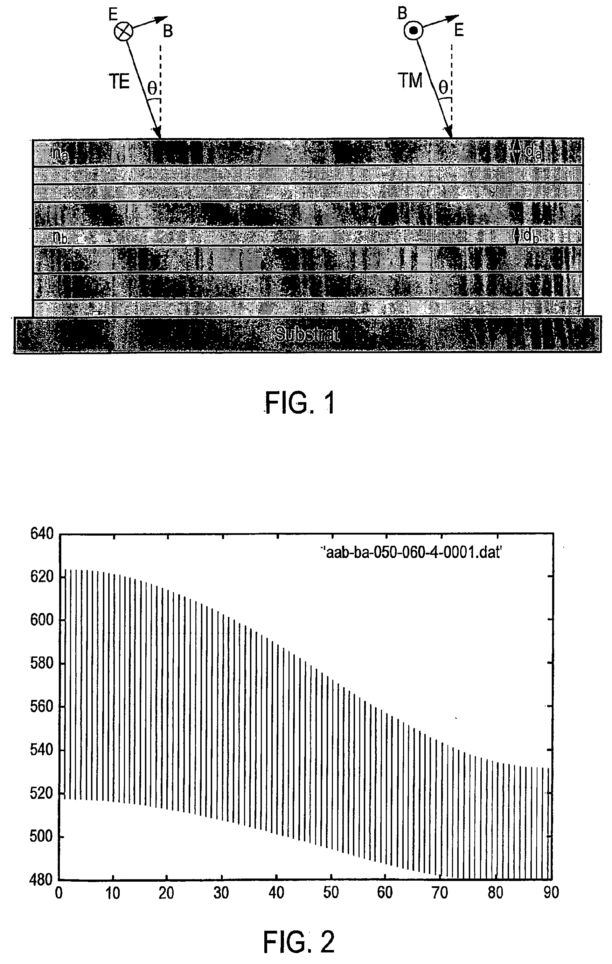

Les calculs doivent donc être répétés jusqu'à obtention d'une structure formant un miroir en référence à la Figure 1

Il découle de ce qui précède que l'invention est également capable d'atteindre l'objectif suivant, plus faible: structuration d'un miroir qui réfléchit seulement pour une plage limitée prédéfinie d'angle d'incidence de la lumière, c'est à dire, par exemple pour $\theta$ compris entre $\theta_1$ et $\theta_2$ (où $\theta_1$ et $\theta_2$ sont eux-mêmes compris entre 0° et 90°) au lieu que la réflexion se fasse pour toutes les valeurs de l'angle d'incidence de 0° à 90°.

L'étape D) du procédé a lieu alors comme suit :

D) on compare le coefficient de transmission T obtenu à une valeur seuil $T_{seuil}$ choisie en fonction de l'utilisation envisagée du miroir omnidirectionnel, et:

- si le coefficient de transmission T est inférieur à la valeur seuil $T_{seuil}$, pour tout angle d'incidence $\theta$ compris entre $\theta_1$ et $\theta_2$, à la longueur d'onde ou sur la plage de longueurs d'onde considérées, pour le mode TE et pour le mode TM, la structure est un miroir pour la lumière ayant un angle d'incidence $\theta$ compris entre $\theta_1$ et $\theta_2$.
- si le coefficient de transmission T est supérieur à la valeur seuil $T_{seuil}$ pour au moins un angle d'incidence $\theta$ compris entre $\theta_1$ et $\theta_2$, à la longueur d'onde ou sur la plage de longueurs d'onde considérées, soit pour le mode TE, soit pour le mode TM, on n'a pas un miroir, et on doit répéter les étapes C) et D), en faisant varier le nombre de couches, leur arrangement et/ou au moins l'un quelconque des paramètres physiques des couches suivant A), ou même, il faut définir une autre hétérostructure pendant l'étape B)

**Brève description des dessins**

La Figure 1 est un schéma simplifié d'hétérostructure apériodique réfléchissante selon l'invention composée de deux types de couches a et b d'épaisseurs $d_a$, $d_b$ et d'indices respectifs $n_a$, $n_b$ reposant sur un substrat avec l'indication des conventions pour les champs électrique et magnétique E et B de la lumière pour les modes TE et TM La Figure 2 est le diagramme, pour l'exemple de la suite $\sigma(a)$ = aab, $\sigma(b)$ = ba de la longueur d'onde $\lambda$ en fonction de l'angle $\theta$ d'incidence de la lumière pour une structure définie par ses paramètres fondamentaux: $d_a$ = 28 nanomètres, $d_b$ = 34 nanomètres, $n_a$ = 3.2 et $n_b$ = 1.6 et 4 itérations. La partie hachurée indique les régions dans lesquelles le coefficient de transmission T calculé (en référence à R3) est inférieur au seuil imposé $T_{seuil}$. ici 0,01. Dans la Figure 2, la structure est réfléchissante de façon omnidirectionnelle pour la plage de longueur d'ondes comprises entre 518 nanomètres et 531 nanomètres.

**Description détaillée de l'invention avec Exemple**

L'invention propose de mettre en oeuvre la technique appelée récurrence de blocs (ou qui pourra être appelée "Building Block Recurrence" selon la terminologie anglo-saxonne, ou BBR).

Ce procédé peut être mis en oeuvre par ordinateur.

La méthode BBR est ici illustrée pour la suite substitutive sur un alphabet de 2 lettres a et b engendrée par la substitution $\sigma$ définie dans le premier exemple ci-dessus, et dans laquelle $\sigma(a)$ = *aab* et $\sigma(b)$ = *ba*. Les deux lettres a et b sont représentatives de couches d'une hétérostructure pouvant différer l'une de l'autre par leur composition et/ou leur épaisseur.

Considérons deux matrices carrées *A* et *B,* d'ordre 2 et de déterminant 1. Si dans le mot $\sigma^j(a)$ on remplace chaque occurrence de *a* par *A* et chaque occurrence de *b* par *B,* on obtient un produit de matrices dont le résultat est noté $A_j$. De même, si on fait ces substitutions dans $\mathcal{A}$ on obtient une matrice $B_j$. Autrement dit, à la couche a peut être associée une matrice $A_0$ intégrant chacun des paramètres physiques de la couche, notamment l'épaisseur et l'indice de réfraction, et des paramètres de la lumière traversant ladite couche. De manière analogue, il peut être associé à la couche b une matrice $B_0$ intégrant chacun des paramètres physiques de la couche, notamment l'épaisseur et l'indice de réfraction, et des paramètres de la lumière traversant ladite couche. Si on désigne par $A_n$ et $B_n$ les matrices obtenues après n itérations de la substitution $\sigma$, la BBR permet de calculer simplement, et sans approximation de calcul, les

matrices $A_{n+1}$ et $B_{n+1}$, lorsque l'on connaît $A_n$ et $B_n$: ainsi, dans le cas où $\sigma(a) = aab$ et $\sigma(b) = ba$, on a

$$A_{n+1} = A_n\, A_n\, B_n$$

et

$$B_{n+1} = B_n\, A_n.$$

On peut encore améliorer cette récurrence de la façon suivante. Les matrices $A_{n+1}$ et $B_{n+1}$, sont des combinaisons linéaires des matrices I (matrice unité d'ordre 2), $A_n$ et $B_n$.
Cette relation de récurrence s'écrit:

$$A_{n+1} = N_{\sigma,1,1}(x_n,\, y_n,\, z_n) \times I + N_{\sigma,1,2}(x_n,\, y_n,\, z_n)A_n + N_{\sigma,1,3}(x_n,\, y_n,\, z_n)B_n$$
$$+ N_{\sigma,1,4}(x_n,\, y_n,\, z_n)A_nB_n \qquad\qquad (R4)$$

$$B_{n+1} = N_{\sigma,2,1}(x_n,\, y_n,\, z_n) \times I + N_{\sigma,2,2}(x_n,\, y_n,\, z_n)A_n + N_{\sigma,2,3}(x_n,\, y_n,\, z_n)B_n$$
$$N_{\sigma,2,4}(x_n,\, y_n,\, z_n)A_nB_n \qquad\qquad (R5)$$

$$A_{n+1}B_{n+1} = N_{\sigma,3,1}(x_n,\, y_n,\, z_n) \times I + N_{\sigma,3,2}(x_n,\, y_n,\, z_n)A_n + N_{\sigma,3,3}(x_n,\, y_n,\, z_n)B_n +$$
$$N_{\sigma,3,4}(x_n,\, y_n,\, z_n)A_nB_n \qquad\qquad (R6)$$

où:

- la matrice $N_\sigma$ est une matrice $3 \times 4$ dont les coefficients $N_{\sigma,i,j}$ (avec $1 \leq i \leq 3$ et $1 \leq j \leq 4$) sont des polynômes de trois variables x, y et z à coefficients entiers, et
- $TrA_n = x_n$, $TrB_n = y_n$, et $TrA_nB_n = z_n$ sont, respectivement la trace de la matrice $A_n$, la trace de la matrice $B_n$, et la trace de la matrice $A_nB_n$.

Une méthode pour déterminer les polynômes $N_{\sigma,i,j}$, coefficients de $N_\sigma$ est présentée dans:

- D8: J. Peyrière, On an article by W. Magnus on the Fricke characters of free groups. J. of Algebra 228 (2000), 659-673,
- D9: J. Peyrière, Polynomial dynamical systems associated with substitutions. In Substitutions in Dynamics, Arithmetics and Combinatorics. Eds. V. Berthé, S. Ferenczi, C. Mauduit, and A. Siegel. Lecture Notes in Mathematics 1794. Springer 2002, p.321-342. ISSN 0075-8434, ISBN 3-540-44141-7.)

Les relations R4, R5 et R6 peuvent être écrites sous la forme:

$$\begin{pmatrix} A_{n+1} \\ B_{n+1} \\ A_{n+1}B_{n+1} \end{pmatrix} = N_\sigma\left(x_n, y_n, z_n\right)\begin{pmatrix} I \\ A_n \\ B_n \\ A_nB_n \end{pmatrix}(R7)$$

où I désigne la matrice unité d'ordre 2.
On voit que dans cet exemple précis la matrice $M_N = A_n$ est représentative de l'hétérostructure comportant N couches obtenues après n substitutions de la suite substitutive $\sigma$.
Le procédé utilise la trace et l'antitrace des matrices de la relation (R7). On obtient ainsi, pour la trace:

$$\begin{pmatrix} x_{n+1} \\ y_{n+1} \\ z_{n+1} \end{pmatrix} = N_\sigma (x_n, y_n, z_n) \begin{pmatrix} x_n \\ y_n \\ z_n \end{pmatrix}^2 \qquad (R8)$$

et pour l'antitrace, désignée par "aTr":

$$\begin{pmatrix} aTrA_{n+1} \\ aTrB_{n+1} \\ aTrA_{n+1}B_{n+1} \end{pmatrix} = N_\sigma (x_n, y_n, z_n) \begin{pmatrix} 0 \\ aTrA_n \\ aTrB_n \\ aTrA_nB_n \end{pmatrix} (R9)$$

La relation (R8) est appelée application de trace ("trace mapping" dans la littérature anglo-saxonne). Elle permet le calcul de $x_n$, $y_n$, et $z_n$ par récurrence, et la relation (R9) celui des antitraces.

Les détails utiles peuvent être trouvés dans

-    D10: J.-P. Allouche, J. Peyrière, Sur une formule de récurrence sur les traces de produits de matrices associés à certaines substitutions. C. R. Acad. Sc. Paris, t. 302, Série II, (1986) n° 18, p. 1135,
-    D11: J. Peyrière, Trace maps. In Beyond Quasicrystals. Eds. F. Axel and D. Gratias. Editions de Physique and Springer, 1995, p. 465-480).

On voit donc que la BBR <u>contient</u> l'application de trace, mais elle est plus puissante et indispensable, en ce sens qu'elle donne accès à toutes les combinaisons de coefficients de $A_n$ et $B_n$ et non pas seulement à leurs traces.

Les relations (R4) à (R9) ci-dessus sont générales dans le sens où elles ne sont pas limitées à une suite substitutive particulière, mais s'appliquent au contraire à toute suite substitutive construite à partir d'un alphabet de deux lettres a et b.

Toutefois, en suivant toujours notre exemple, dans lequel chaque lettre a est remplacée par le mot de substitution $\sigma_a$ = aab, et chaque lettre b est remplacée par le mot de substitution $\sigma_b$ = ba, on voit que les relations (R4) à (R6) s'écrivent :

$$A_{n+1} = - B_n + x_n A_n B_n \qquad (R10)$$

$$B_{n+1} = (z_n - x_n y_n) \times I + y_n A_n + x_n B_n - A_n B_n \qquad (R11)$$

$$A_{n+1}B_{n+1} = (x_n - y_n z_n) \times I + ( x_n y_n z_n - x_n^2 - y_n^2 + 1) A_n + y_n A_n B_n \qquad (R12)$$

où $x_n$, $y_n$ et $z_n$ sont les traces de $A_n$, $B_n$ et $A_n B_n$, ce qui permet d'obtenir pour la matrice 3×4 $N_\sigma$

$$N_\sigma(x_n, y_n, z_n) = \begin{pmatrix} 0 & 0 & -1 & x_n \\ z_n - x_n y_n & y_n & x_n & -1 \\ x_n - y_n z_n & x_n y_n z_n - x_n^2 - y_n^2 + 1 & 0 & y_n \end{pmatrix} \qquad (R13)$$

Ou effectue alors le produit de toutes les matrices élémentaires au moyen de cette récurrence par blocs et selon leur arrangement, pour obtenir la matrice $M_N = A_n$ dans l'exemple qui permet le calcul du coefficient de transmission T de la structure suivant

$$T = \frac{4}{\left( \left( TrA_n \right)^2 + \left( aTrA_n \right)^2 \right)} \quad \text{(R3)}$$

ce qui achève la description permettant la mise en oeuvre du procédé dans le cas de l'exemple.

Enfin, l'emploi de la technique par récurrence de blocs (BBR) peut évidemment être généralisé à un alphabet comportant k lettres $a_1$, $a_2$,..., $a_k$. Ces différentes lettres sont alors représentatives des k couches d'une hétérostructure pouvant différer l'une de l'autre par leur composition et/ou leur épaisseur.

A partir d'une substitution $\sigma$ sur cet alphabet: si $A_1,A_2,...,A_k$ sont des matrices carrées d'ordre 2 et de déterminant 1, on considère, pour chaque j compris entre 1 et k, et pour tout $n \geq 0$, la matrice $A_{j,n}$ obtenue en n remplaçant dans le mot $\sigma$ ($a_j$) chaque lettre $a_i$ (pour i=1,2,...,k) par $A_i$.

Pour chaque suite $J=(j_1, j_2,..., j_v)$ telle que $1 \leq v \leq k$ et $1 \leq j_1 < j_2 < k < j_v \leq k$ (il y a 2 -1 telles suites), on pose $A_{j,n} = A_{j_1,n}\ A_{j_2,n}...A_{j_v,n}$.

Alors, les matrices $A_{J,n+1}$ sont des combinaisons linéaires de I, la matrice unité d'ordre 2, et des matrices $A_{J,n}$. Les coefficients de ces relations étant des polynômes en les traces des matrices $A_{J,n}$.

On peut obtenir des formules avec moins de termes si l'on accepte que les coefficients ne soient plus des polynômes, mais des fractions rationnelles. Mais ces nouvelles formules n'apportent pas d'avantage notable lors des calculs numériques, du moins si l'alphabet a peu de lettres.

Une fois la matrice $M_n$ (en référence à R2) connue, on s'assure de la propagation de la lumière à travers l'hétérostructure en calculant le coefficient de transmission T des N couches de l'hétérostructure par la formule:

$$T = \frac{4}{\left( \left( TrM_n \right)^2 + \left( aTrM_n \right)^2 \right)} \quad \text{(R3)}$$

Une fois ce calcul effectué, on compare la valeur du coefficient de transmission de la structure obtenue avec une valeur seuil $T_{seuil}$, en dessous de laquelle on considère que la structure est un miroir.

La valeur seuil $T_{seuil}$ sera par exemple définie par la valeur zéro avec une approximation de l'ordre de $10^{-5}$, pour toute valeur de l'angle d'incidence. Pour certaines applications, la valeur seuil sera définie par la valeur 0,02 ou même 0,05.

Avec le procédé proposé par l'invention, il devient donc possible de réaliser un miroir non métallique multicouche omnidirectionnel adapté pour une application donnée, sans aucune contrainte préalable sur les paramètres physiques intervenant dans cette structuration, en d'effectuant de nombreux calculs avec différentes épaisseurs de couches prises arbitrairement, dans un temps raisonnable et avec les moyens de calculs actuels. Les erreurs d'arrondi engendrées par ces calculs n'ont dès lors plus d'incidence sur le résultat.

De plus, il a également été mis en évidence qu'il était possible d'obtenir des miroirs omnidirectionnels avec des épaisseurs de couches moindres que celles proposées actuellement avec un miroir non métallique multicouche périodique. On comprend que cette structuration est très avantageuse quand il s'agit de passer à l'étape de fabrication.

La fabrication se fait au moyen des technologies classiques de déposition de couches par MBE (molecular beam epitaxy) ou par pulvérisation, techniques courantes qui sont bien maîtrisées.

Le procédé selon l'invention est donc très général, et ne pose aucun a priori sur la nature de la substitution $\sigma$, sur les valeurs des épaisseurs des couches $a_1$, $a_2$,..., $a_k$, ni par ailleurs sur l'ensemble des paramètres physiques: longueur d'onde $\lambda$, angle d'incidence $\theta$, épaisseurs et indices de réfraction des couches.

D'autres caractéristiques de l'invention sont:

- L'hétérostructure peut être obtenue à partir d'une seule suite substitutive, de telle sorte que chaque couche est une couche simple d'un matériau unique

- L'hétérostructure peut être obtenue à partir d'une seule suite substitutive, de telle sorte que chaque couche est l'assemblage de couches élémentaires ayant elles-mêmes une structure

- L'hétérostructure peut être obtenue à partir de plusieurs suites substitutives, de telle sorte que l'hétérostructure est constituée de plusieurs sous-ensembles de couches, chacune obtenue par une suite substitutive.

**Revendications**

1. Procédé de structuration d'un miroir non métallique omnidirectionnel pour une longueur d'onde ou une plage de longueurs d'onde quelconques mais prédéterminées, ce miroir comportant au moins deux couches de matériaux non métalliques différents, ledit procédé comprenant les étapes suivantes :

   A) on définit une structure de base comportant au moins deux couches de matériaux non métalliques différents, a et b à chacune desquelles on associe une matrice élémentaire intégrant des paramètres physiques de la couche, notamment les épaisseurs et indices de réfraction $d_a$, $d_b$, $n_a$, et $n_b$, et des paramètres de la lumière traversant ladite couche, notamment la longueur d'onde $\lambda$ et l'angle d'incidence $\theta$;
   B) à partir de cette structure de base et d'une suite substitutive $\sigma$ choisie appliquée n fois, on définit une hétérostructure
   par le nombre N de ses couches,
   par l'arrangement de ces couches déterminé par les itérations de $\sigma$ et
   par les paramètres physiques de chaque couche qui interviennent dans lesdites matrices élémentaires
   et dans cette hétérostructure on associe à chaque couche j, avec j de 1 à N, sa matrice de transfert $S_j$ intégrant les caractéristiques physiques de la couche considérée notamment épaisseur et indice de réfraction, et les caractéristiques de la lumière la traversant notamment longueur d'onde, angle d'incidence, mode TE ou TM ;
   C) on effectue, au moyen d'un ordinateur, le produit

$$M_N = S_N\ S_{N-1}\ S_{N-2}.......S_2\ S_1$$

   des matrices élémentaires pour chaque valeur des paramètres $\theta$, $\lambda$, $d_a$, $d_b$, $n_a$ et $n_b$, au moyen de la récurrence par blocs définie par $\sigma$ et selon leur arrangement au moyen de la récurrence par blocs pour obtenir la matrice de transfert $M_N$ de l'hétérostructure définie à l'étape B), à partir de laquelle on calcule son coefficient de transmission T par la formule:

$$T = \frac{4}{\left(\left(\ TrM_N\ \right)^2 + \left(\ aTrM_N\ \right)^2\right)}$$

   où $TrM_N$ est la trace de la matrice $M_N$ et $aTrM_N$ son antitrace ;
   D) on compare le coefficient de transmission T obtenu à une valeur seuil $T_{seuil}$ choisie en fonction de l'utilisation envisagée du miroir, et:

   - si le coefficient de transmission T est inférieur à la valeur seuil $T_{seuil}$, pour tout angle d'incidence $\theta$ compris entre $\theta_1$ et $\theta_2$, où $\theta_1$ et $\theta_2$ sont eux-mêmes compris entre 0° et 90°, à la longueur d'onde ou sur la plage de longueurs d'onde considérée, pour le mode TE et pour le mode TM, la structure est un miroir omnidirectionnel pour la lumière ayant un angle d'incidence $\theta$ compris entre $\theta_1$ et $\theta_2$,
   - si le coefficient de transmission T est supérieur à la valeur seuil $T_{seuil}$ pour au moins un angle d'incidence $\theta$ compris entre $\theta_1$ à $\theta_2$, à la longueur d'onde ou sur la plage de longueurs d'onde considérées, soit pour le mode TE, soit pour le mode TM, on n'a pas un miroir, et alors on définit une autre hétérostructure suivant B), et on répète les étapes C) et D) jusqu'à obtention d'un miroir, ou même encore on définit une autre structure de base suivant A), et on répète ensuite les étapes B), C) et D) ;

   E) on fabrique ledit miroir omnidirectionnel pour la lumière ayant un angle d'incidence $\theta$ compris entre $\theta_1$ et $\theta_2$.

2. Procédé de structuration selon la revendication 1, **caractérisé en ce que** l'on définit, lors de l'étape A), une structure comportant k couches $a_j$ avec $1 \leq j \leq k$ de matériaux non métalliques pouvant différer par la composition et/ou l'épaisseur.

3. Procédé de structuration selon l'une des revendications précédentes, **caractérisé en ce que** l'hétérostructure de l'étape B) est obtenue à partir d'une seule suite substitutive, chaque couche de matériau non métallique étant une couche simple réalisée en un matériau unique.

4. Procédé de structuration selon l'une des revendications précédentes, **caractérisé en ce que** l'hétérostructure de l'étape B) est obtenue à partir d'une seule suite substitutive appliquée à un ensemble de couches, dans lequel chaque couche est elle-même un assemblage de couches simples, réalisées chacune en un matériau unique.

5. Procédé de structuration selon l'une des revendications précédentes, **caractérisé en ce que** l'hétérostructure de l'étape B) est obtenue à partir de plusieurs suites substitutives, de sorte que la structure est formée de plusieurs sous-ensembles de couches simples, réalisées chacune en un matériau unique, chaque sous-ensemble étant obtenu par une suite substitutive.

6. Procédé de structuration selon l'une des revendications précédentes, **caractérisé en ce que** le miroir comprend au moins un sous-ensemble de couches dont la disposition est obtenue par composition de substitutions.

7. Procédé de structuration selon l'une des revendications précédentes, **caractérisé en ce que** le miroir comprend une structure obtenue à partir de plusieurs suites substitutives, de sorte que la structure soit formée de plusieurs sous-ensembles de couches simples, chaque sous-ensemble étant obtenu par une suite substitutive.

8. Procédé de structuration selon la revendication 7, **caractérisé en ce que** les sous-ensembles sont assemblés par une autre suite substitutive.

9. Procédé de structuration selon l'une des revendications précédentes, **caractérisé en ce que** le miroir structuré réfléchit pour tout angle d'incidence $\theta$ de la lumière, c'est à dire pour $\theta$ compris entre $\theta_1=0°$ et $\theta_2=90°$.

**Patentansprüche**

1. Verfahren zum Strukturieren (Entwerfen und Herstellen) eines nichtmetallischen Spiegels, der für eine beliebige, aber vorgegebene Wellenlänge oder einen beliebigen, aber vorgegebenen Wellenlängenbereich omnidirektional ist, wobei dieser Spiegel mindestens zwei Schichten aus unterschiedlichen nichtmetallischen Materialien aufweist, wobei das Verfahren die folgenden Schritte aufweist:

A) Definieren einer Basisstruktur, die mindestens zwei Schichten a und b aus unterschiedlichen nichtmetallischen Materialien aufweist, und Verknüpfen jeder Schicht mit einer Elementarmatrix, die physikalische Parameter der Schicht, insbesondere Dicke und Brechungsindex $d_a$, $d_b$, $n_a$ und $n_b$, und Parameter des die Schicht durchquerenden Lichtstrahls, insbesondere Wellenlänge $\lambda$ und Einfallswinkel $\theta$, aufweist;
B) ausgehend von dieser Basisstruktur und einer n Mal angewandten gewählten Substitutionsfolge $\sigma$:

Definieren einer Heterostruktur
durch die Anzahl N ihrer Schichten,
durch die durch die Iterationen von $\sigma$ festgelegte Anordnung dieser Schichten und
durch die in den Elementarmatrizen auftretenden physikalischen Parameter jeder Schicht, und
Verknüpfen jeder Schicht j (mit j von 1 bis N) in dieser Heterostruktur mit ihrer Transfermatrix $S_j$, die die physikalischen Eigenschaften der betrachteten Schicht, insbesondere Dicke und Brechungsindex, und die Eigenschaften des durchquerenden Lichtstrahls, insbesondere Wellenlänge, Einfallswinkel, TE-Mode oder TM-Mode, aufweist;

C) mit einem Computer durchgeführtes Berechnen des Produkts

$$M_N = S_N S_{N-1} S_{N-2} \ldots S_2 S_1$$

der Elementarmatrizen für jeden Wert der Parameter $\theta$, $\lambda$, $d_a$, $d_b$, $n_a$ und $n_b$ mithilfe einer durch $\sigma$ definierten Blockrekursion und gemäß ihrer Anordnung mithilfe der Blockrekursion, um die Transfermatrix $M_N$ der im Schritt B) definierten Heterostruktur zu gewinnen und ausgehend von dieser (Transfermatrix $M_N$) den Transmissionskoeffizient T durch die folgende Formel zu berechnen:

$$T = \frac{4}{\left( TrM_N \right)^2 + \left( aTrM_N \right)^2}$$

wobei $TrM_N$ die Spur der Matrix $M_N$ und $aTrM_N$ ihre Antispur ist;

D) Vergleichen des gewonnenen Transmissionskoeffizienten T mit einem in Abhängigkeit von der beabsichtigten Verwendung des Spiegels gewählten Schwellenwert $T_{seuil}$ und:

- falls für jeden Einfallswinkel $\theta$ zwischen $\theta_1$ und $\theta_2$, mit $\theta_1$ und $\theta_2$ zwischen 0° und 90°, bei der betrachteten Wellenlänge oder im betrachteten Wellenlängenbereich, für die TE-Mode oder die TM-Mode, der Transmissionskoeffizient T kleiner als der Schwellenwert $T_{seuil}$ ist: Bestätigen der Heterostruktur als eine Struktur, die für Licht, das einen Einfallswinkel $\theta$ zwischen $\theta_1$ und $\theta_2$ hat, ein omnidirektionaler Spiegel ist,

- falls für mindestens einen Einfallswinkel $\theta$ zwischen $\theta_1$ und $\theta_2$, bei der betrachteten Wellenlänge oder im betrachteten Wellenlängenbereich, sei es für die TE-Mode oder die TM-Mode, der Transmissionskoeffizient T größer als der Schwellenwert $T_{seuil}$ ist: Verwerfen der Heterostruktur und Definieren einer anderen Heterostruktur gemäß Schritt B) und Wiederholen der Schritte C) und D), bis ein (omnidirektionaler) Spiegel erzielt ist, oder auch erneutes Definieren einer anderen Basisstruktur gemäß Schritt A) und Wiederholen der Schritte B), C) und D);

E) Herstellen des für Licht eines Einfallswinkels $\theta$ zwischen $\theta_1$ und $\theta_2$ omnidirektionalen Spiegels.

2. Verfahren nach Anspruch 1, **dadurch gekennzeichnet, dass** im Schritt A) eine Struktur definiert wird, die k Schichten $a_j$, mit $1 \leq j \leq k$, aus nichtmetallischen Materialien aufweist, die unterschiedliche Zusammensetzungen und/oder unterschiedliche Dicken aufweisen können.

3. Verfahren nach einem der vorstehenden Ansprüche, **dadurch gekennzeichnet, dass** die Heterostruktur des Schritts B) ausgehend von einer einzigen Substitutionsfolge gewonnen wird, wobei jede Schicht nichtmetallischen Materials eine aus einem einheitlichen Material hergestellte einfache Schicht ist.

4. Verfahren nach einem der vorstehenden Ansprüche, **dadurch gekennzeichnet, dass** die Heterostruktur des Schritts B) ausgehend von einer einzigen Substitutionsfolge gewonnen wird, die auf eine Schichtgruppe angewandt wird, in welcher jede Schicht selbst wiederum eine Anordnung von einfachen Schichten ist, die jeweils aus einem einheitlichen Material hergestellt sind.

5. Verfahren nach einem der vorstehenden Ansprüche, **dadurch gekennzeichnet, dass** die Heterostruktur des Schritts B) ausgehend von mehreren Substitutionsfolgen gewonnen wird, so dass die Struktur aus mehreren Untergruppen, die jeweils einfache Schichten eines einheitlichen Materials aufweisen, gebildet wird und jede Untergruppe durch eine Substitutionsfolge gewonnen wird.

6. Verfahren nach einem der vorstehenden Ansprüche, **dadurch gekennzeichnet, dass** der Spiegel mindestens eine Untergruppe von Schichten aufweist, deren Anordnung durch Zusammenstellung von Substitutionen gewonnen wird.

7. Verfahren nach einem der vorstehenden Ansprüche, **dadurch gekennzeichnet, dass** der Spiegel eine Struktur aufweist, die ausgehend von mehreren Substitutionsfolgen gewonnen wird, so dass die Struktur aus mehreren Untergruppen, die jeweils einfache Schichten aufweisen, gebildet wird und jede Untergruppe durch eine Substitutionsfolge gewonnen wird.

8. Verfahren nach Anspruch 7, **dadurch gekennzeichnet, dass** die Zusammenstellung der Untergruppen durch eine andere Substitutionsfolge erfolgt.

9. Verfahren nach einem der vorstehenden Ansprüche, **dadurch gekennzeichnet, dass** der strukturierte Spiegel für jeden Einfallswinkel $\theta$ des Lichts, das heißt für $\theta$ zwischen $\theta_1 = 0°$ und $\theta_2 = 90°$, reflektierend ist.

**Claims**

1. Method for structuring an omnidirectional non-metallic mirror for a wavelength or a span of arbitrary but predetermined wavelengths, this mirror comprising at least two layers of different non-metallic materials, said method comprising the following steps:

A) a base structure is defined, comprising at least two layers, a and b of different non-metallic materials, with each of which is associated an elementary matrix incorporating physical parameters of the layer, , in particular the thicknesses and refractive indices $d_a$, $d_b$, $n_a$, and $n_b$, and parameters of the light passing through said layer, in particular the wavelength $\lambda$ and the angle of incidence $\theta$;

B) based on this base structure and a chosen substitution $\rho$ applied n times, a heterostructure is defined by the number N of its layers,

by the arrangement of these layers as determined by the iterations of $\sigma$ and

by the physical parameters of each layer which are involved in said elementary matrices

and in this heterostructure, with each layer j with j from 1 to N is associated the transfer matrix $S_j$ incorporating the physical characteristics of the layer considered, in particular thickness, refractive index, and the characteristics of the light passing through it, in particular wavelength, angle of incidence, TE or TM mode;

C) a computer is used to calculate the product

$$M_N = S_N \; S_{N-1} \; S_{N-2} \ldots \ldots S_2 \; S_1$$

of the elementary matrices for each value of the parameters $\theta$, $\lambda$, $d_a$, $d_b$, $n_a$ and $n_b$, by means of the block-wise recurrence defined by $\sigma$ and according to their arrangement by means of the block-wise recurrence to obtain the transfer matrix $M_N$ of the heterostructure defined in step B), from which the transmission coefficient T is calculated through the formula:

$$T = \frac{4}{\left( \left( \; TrM_N \; \right)^2 + \left( \; aTrM_N \; \right)^2 \right)}$$

where $TrM_N$ is the trace of the matrix $M_N$ and $aTrM_N$ its antitrace;

D) the transmission coefficient T obtained is compared with a threshold value $T_{thresh}$ chosen as a function of the envisaged use of the mirror, and:

- if the transmission coefficient T is below the threshold value $T_{thresh}$, for any angle of incidence $\theta$ lying between $\theta_1$ and $\theta_2$, where $\theta_1$ and $\theta_2$ are themselves comprised between 0° and 90°, at the wavelength or allover the span of wavelengths considered, for the TE mode and for the TM mode, the structure is an omnidirectional mirror for the light having an angle of incidence $\theta$ lying between $\theta_1$ and $\theta_2$.

- if the transmission coefficient T is above the threshold value $T_{thresh}$ for at least one angle of incidence $\theta$ lying between $\theta_1$ to $\theta_2$, at the wavelength or in the span of wavelengths considered, either for the TE mode, or for the TM mode, one does not have a mirror, and then another heterostructure is defined in accordance with B), and steps C) and D) are repeated until a mirror is obtained, or else another base structure is defined in accordance with A), and steps B), C) and D) are repeated thereafter;

E) Said mirror omnidirectional for the light having an incidence $\theta$ comprised between $\theta_1$ and $\theta_2$ is made.

2. Method for structuring according to claim 1, **characterized in that** a structure comprising k layers $a_j$ with $1 \leq j \leq k$ of non-metallic materials that may differ in composition and/or thickness is defined during step A).

3. Method for structuring according to one of the preceding claims, **characterized in that** the heterostructure of step B) is obtained with the help of a single substitutive sequence, each non-metallic material layer being a simple layer made of a single material.

4. Method for structuring according to one of the preceding claims, **characterized in that** the heterostructure of step B) is obtained with the help of a single substitutive sequence applied to a set of layers, in which each layer is itself an assembly of simple layers, each layer being made of a single material.

5. Method for structuring according to one of the preceding claims, **characterized in that** the heterostructure of step B) is obtained with the help of several substitutive sequences, so that the structure is formed of several subsets of simple layers, each made of a single material, each subset being obtained using a substitutive sequence.

6. Method for structuring according to one of the preceding claims, **characterized in that** the structured mirror comprises at least one subset of layers whose disposition is obtained by composition of substitutions.

7. Method for structuring according to one of the preceding claims, **characterized in that** the structured mirror comprises a structure obtained with the help of several substitutive sequences, so that the structure is formed of several subsets of simple layers, each subset being obtained using a substitutive sequence.

8. Method for structuring according to claim 7, **characterized in that** the subsets are assembled using another substitutive sequence.

9. Method for structuring according to one of the preceding claims, **characterized in that** the structured mirror reflects for any angle of incidence $\theta$ of light, that is for $\theta$ comprised between $\theta_1 = 0°$ and $\theta_2 = 90°$.

## FIG. 1

## FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6903873 B1, Joannopoulos

**Littérature non-brevet citée dans la description**

- **F. ABELÈS.** *Annales de Physique,* vol. 5 (1950), 596-640, 707-782
- Principles of Optics. Cambridge University Press, 1999
- **J. D. JOANNOPOULOS ; R. D. MEADE ; J. N. WINN.** Photonic Crystals. Princeton U. P. Publisher, 1995
- **P. YEH.** Optical waves in layered media. John Wiley and sons
- **M. KOHMOTO ; B. SUTHERLAND ; K. IGUCHI.** *Phys. Rev. Lett.,* 1987, vol. 58, 2436
- **L. DAL NEGRO ; M. STOLFI ; Y. YI ; J. MICHEL ; X. DUAN ; L.C. KIMERLING ; J. LEBLANC ; J. HAAVISTO.** *Appl. Phys. Lett.,* 2004, vol. 84, 5186

- **W. MAGNUS.** Fricke characters of free groups. *J. of Algebra,* 2000, vol. 228, 659-673
- Polynomial dynamical systems associated with substitutions. **J. PEYRIÈRE.** In Substitutions in Dynamics, Arithmetics and Combinatorics. Springer, 2002, 321-342
- **J.-P. ALLOUCHE ; J. PEYRIÈRE.** Sur une formule de récurrence sur les traces de produits de matrices associés à certaines substitutions. *C. R. Acad. Sc. Paris,* 1986, (18), 1135
- Trace maps. **J. PEYRIÈRE.** In Beyond Quasicrystals. Physique and Springer, 1995, 465-480